# EUROPEAN PATENT APPLICATION

(11) **EP 3 608 575 A1**
(43) Date of publication of application: **12.02.2020**
(21) Application number: 19179225.8
(22) Date of filing: 10.06.2019
(51) Int. Cl.: F16L 25/00, F16L 37/14, F16L 39/06, F02C 7/228, F16L 15/08

(54) **MULTI-PORT CONNECTOR ASSEMBLY**

(30) Priority: 10.08.2018 US 201816100993
(71) Applicant: United Technologies Corporation, Farmington, CT 06032 (US)
(72) Inventor: STYBORSKI, Jeremy, East Hartford, CT 06118 (US); SCHNEIDER, Alex J., South Glastonbury, CT 06073 (US)
(74) Representative: Dehns

(57) **Abstract**

A connector assembly (100) may include a first fitting (110), a plurality of second fittings (120), a compression plate (130), and a nut. A plurality of ports (111A, 111B, 111C) may be defined within and extend through the first fitting (110), and the plurality of second fittings (120) may correspond to the plurality of ports (111A, 111B, 111C). That is, each second fitting of the plurality of second fittings (120) may be configured to connect to a respective port of the plurality of ports (111A, 111B, 111C). The nut may be configured to threadably engage the first fitting (110) and is configured to apply an axial compression to the compression plate (130). The compression plate (130) is configured to transfer the axial compression to the plurality of second fittings (120) to respectively secure the plurality of second fittings (120) to the plurality of ports (111A, 111B, 111C) of the first fitting (110).

## Description

### GOVERNMENT LICENSE RIGHTS

This invention was made with Government support under FA8626-16-C-2139 awarded by the United States Air Force. The Government has certain rights in this invention.

### FIELD

The present disclosure relates to multi-port fittings, and more specifically to a connector assembly for connecting sets of multiple tubes together.

### BACKGROUND

In certain applications, multiple fluid conduits are configured to be installed in close proximity to each other. For example, fuel conduits in a gas turbine engine are often disposed alongside each other in areas of the gas turbine engine where space is limited. Connecting multiple fluid conduits to other fluid conduits or to other components is often difficult because access is restricted/limited. That is, when fluid conduits are positioned in close proximity to each other, it can be difficult to individually make connections to other fluid conduits. As a result, conventional fluid conduits are not packed as tightly as they could be, thus potentially wasting valuable space (e.g., in the gas turbine engine).

### SUMMARY

In various embodiments, the present disclosure provides a connector assembly that includes a first fitting, a plurality of second fittings, a compression plate, and a nut. A plurality of ports may be defined within and extend through the first fitting, and the plurality of second fittings may correspond to the plurality of ports. That is, each second fitting of the plurality of second fittings may be configured to connect to a respective port of the plurality of ports. The nut may be configured to threadably engage the first fitting and is configured to apply an axial compression to the compression plate. The compression plate is configured to transfer the axial compression to the plurality of second fittings to respectively secure the plurality of second fittings to the plurality of ports of the first fitting.

In various embodiments, the first fitting includes a proximal end defining a plurality of proximal openings corresponding to the plurality of ports. The first fitting may have a distal end defining a plurality of distal openings corresponding to the plurality of ports. Each second fitting of the plurality of second fittings may include a proximal portion and a distal portion. In various embodiments, the distal portion of each second fitting of the plurality of second fittings is configured to connect to a respective proximal opening of the plurality of proximal openings corresponding to the plurality of ports. In various embodiments, a first plurality of tubes are configured to extend from and be respectively coupled to the plurality of distal openings of the first fitting and a second plurality of tubes are configured to extend from and be respectively coupled to the proximal portion of the plurality of second fittings.

In various embodiments, the connector assembly further includes a plurality of pivot washers corresponding to the plurality of second fittings. The distal portion of each second fitting of the plurality of second fittings may comprise a flange and the plurality of pivot washers may be configured to be disposed between the compression plate and a proximal surface of the flange of the distal portion of each second fitting of the plurality of second fittings. In various embodiments, the proximal surface of the flange of the distal portion of each second fitting of the plurality of second fittings is convex. In various embodiments, a distal surface of each pivot washer of the plurality of pivot washers is tapered and is configured to engage the proximal surface of the flange of the distal portion of a respective second fitting of the plurality of second fittings.

In various embodiments, the proximal end of the first fitting has a plurality of frustoconical lugs corresponding to the plurality of proximal openings. The distal portion of each second fitting of the plurality of second fittings may have a flange, and a distal surface of the flange of the distal portion of each second fitting of the plurality of second fittings may be tapered. In various embodiments, the distal surface of the flange of the distal portion of each second fitting of the plurality of second fittings is configured to be seated against a respective frustoconical lug of the plurality of frustoconical lugs of the proximal end of the first fitting. In various embodiments, the connector assembly further includes a plurality of gaskets corresponding to the plurality of second fittings, wherein the plurality of gaskets are configured to be respectively disposed between the distal surface of the flange of the distal portion of each second fitting of the plurality of second fittings and the plurality of frustoconical lugs of the proximal end of the first fitting.

In various embodiments, the connector assembly further includes a thrust wire configured to be disposed in axial-compression-transferring communication between the nut and the compression plate. The plurality of tubes may be three. For example, a first plurality of proximal tubes may be three proximal tubes and the second plurality of distal tubes may be three distal tubes. The plurality of ports may be three ports and the plurality of second fittings may be three fittings. In various embodiments, the compression plate has a plurality of connector assembly es corresponding to the plurality of second fittings such that each second fitting of the plurality of second fittings is configured to extend through a respective notch of the plurality of notches. In various embodiments, the compression plate comprises a plurality of pass-through apertures corresponding to the plurality of second fittings such that each second fitting of the plurality of second fittings is configured to extend through a respective pass-through aperture of the plurality of pass-through apertures.

Also disclosed herein, according to various embodiments, is a gas turbine engine that includes an augmentor section. The augmentor section may include a plurality of proximal tubes extending radially outward from a fuel manifold, wherein the plurality of tubes form a radially inward portion of a spraybar. The augmentor section may further include a plurality of distal tubes that form a radially outward portion of the spraybar. Still further, the augmentor section may include a connector assembly disposed between the plurality of proximal tubes and the plurality of distal tubes such that the connector assembly connects the radially inward portion of the spraybar to the radially outward portion of the spraybar, wherein the connector assembly comprises a nut that secures and retains the plurality of proximal tubes to the plurality of distal tubes.

Also disclosed herein is a method for coupling a first plurality of tubes to a second plurality of tubes is provided. The method includes, according to various embodiments, respectively coupling the first plurality of tubes to a plurality of ports of a first fitting. The plurality of ports may be defined with and may extend through the first fitting. The method may further include respectively coupling the second plurality of tubes to a plurality of second fittings. Still further, the method may include inserting the plurality of second fittings through a nut and threadably engaging the nut to the first fitting to exert an axial compression to secure the plurality of second fittings to the first fitting.

In various embodiments, the method further includes positioning a compression plate in axial-compression-transferring communication between the nut and the plurality of second fittings. In various embodiments, the method further comprises positioning a thrust wire in axial-compression-transferring communication between the nut and the compression plate. In various embodiments, the method further includes respectively positioning a plurality of pivot washers between the compression plate and the plurality of second fittings.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a cross-sectional view of a gas turbine engine, in accordance with various embodiments;
FIG. 2 illustrates a cross-sectional view of an section of a gas turbine engine, in accordance with various embodiments;
FIG. 3 illustrates perspective view of an augmentor fuel injection system with a connector assembly, in accordance with various embodiments;
FIG. 4 illustrates an exploded perspective view of a connector assembly, in accordance with various embodiments;
FIG. 5 illustrates axial view of a connector assembly, in accordance with various embodiments;
FIG. 6 illustrates a cross-sectional view of a connector assembly, in accordance with various embodiments;
FIG. 7 illustrates a magnified cross-sectional view of a portion of a connector assembly, in accordance with various embodiments;
FIG. 8A illustrates a perspective view of a portion of a connector assembly, in accordance with various embodiments;
FIG. 8B illustrates a perspective view of a compression plate of a connector assembly, in accordance with various embodiments;
FIG. 8C illustrates another perspective view of a compression plate of a connector assembly, in accordance with various embodiments;
FIG. 8D illustrates another perspective view of a compression plate of a connector assembly, in accordance with various embodiments; and
FIG. 9 is a schematic flow chart diagram of a method for coupling a first plurality of tubes to a second plurality of tubes, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the disclosure. Thus, the detailed description herein is presented for purposes of illustration only and not of limitation.

Disclosed herein, according to various embodiments, is a connector assembly for coupling multiple sets of tubes together in a compact fashion. Generally, and according to various embodiments, the connector assembly enables a first plurality of fluid conduits (e.g., tubes) to be respectively coupled to a second plurality of fluid conduits using a single nut for securing/retaining the multiple connections. While numerous details are included herein pertaining to the connector assembly being utilized to couple multiple fuel tubes together of a spraybar in an augmentor section of a gas turbine engine, the connector assembly provided herein may be utilized in other areas of a gas turbine engine, or may be used in non-gas turbine engine implementations. That is, the scope of the disclosure is not limited to gas turbine engines, and the connector assembly may be utilized in situations in which multiple fluid conduits would benefit from being packed in close proximity to each other.

As used herein, "aft" refers to the direction associated with the exhaust (e.g., the back end) of a gas turbine engine. As used herein, "forward" refers to the direction associated with the intake (e.g., the front end) of a gas turbine engine. The term "axial," as used herein, may refer to a direction along or parallel to the engine central longitudinal axis. A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component. The term "upstream" is used to refer to directions and positions located closer to the source than directions and positions referenced as "downstream."

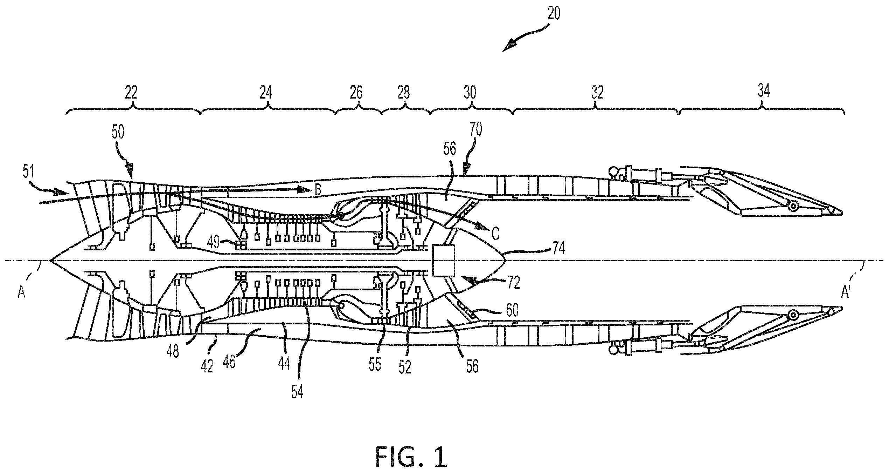

In various embodiments and with reference to FIG. 1, a gas turbine engine 20 is provided. Gas turbine engine 20 may comprise a two-spool low-bypass augmented turbofan that may generally incorporate a fan section 22, a compressor section 24, a combustor section 26, a turbine section 28, an augmentor section 30, an exhaust duct section 32, and a nozzle system 34. Fan section 22, a compressor section 24, a combustor section 26, a turbine section 28, an augmentor section 30, an exhaust duct section 32, and a nozzle system 34 are along an engine central longitudinal axis A-A'. Engine central longitudinal axis A-A' is oriented in the z direction on the provided xyz axis. Although depicted as an augmented low-bypass turbofan in the non-limiting embodiment of FIG. 1, it should be understood that the concepts described herein are applicable to other gas turbine engines including geared architecture engines, direct drive turbofans, high-bypass turbofans, turbojets, turboshafts, and other engine architectures. A gas turbine engine may comprise an industrial gas turbine (IGT) or a geared engine, such as a geared turbofan, or a non-geared engine, such as a turbofan, or may comprise any gas turbine engine as desired.

The compressor section 24, the combustor section 26, and the turbine section 28 are generally referred to as the engine core. An outer engine case structure 42 and an inner engine structure 44 define a generally annular bypass airflow path (or bypass duct) 46 around a core airflow path 48 of the engine core. It should be understood that various structures within the engine may define the outer engine case structure 42 and the inner engine structure 44, which generally define an exoskeleton to support the core engine therein.

Air is drawn into gas turbine engine 20 through a fan 50. Air may enter fan 50 at intake 51 and may be divided downstream between a core airflow C, which flows through core airflow path 48, and a bypass airflow B, which flows through bypass airflow path 46. Compressor section 24 may be located downstream of fan section 22. Core airflow C passes through compressor section 24, combustor section 26, turbine section 28, and augmentor section 30. In augmentor section 30, fuel may be selectively injected and burned to generate additional thrust through the nozzle system 34. Bypass airflow B may be utilized for multiple purposes including, for example, cooling and pressurization. Bypass airflow B may ultimately be at least partially injected into core airflow path 48 adjacent to the augmentor section 30 and/or the exhaust duct section 32 and/or the nozzle system 34.

Gas turbine engine 20 may generally comprise a low speed spool and a high speed spool mounted concentrically via bearing systems 49 for rotation about engine central longitudinal axis A-A'. It should be understood that various bearing systems 49 at various locations may alternatively or additionally be provided. In various embodiments, fan section 22, compressor section 24, and turbine section 28 may each include a rotor-stator assembly comprising one or more stages or sets of rotating blades ("rotor blades") and one or more stages or sets of stationary vanes ("stator vanes") axially interspersed with the associated blade stages but non-rotating about engine central longitudinal axis A-A'. Unless otherwise indicated, the term "stage" may refer to a fan stage, a compressor stage, and/or a turbine stage. The blade stages of fan 50 and a low pressure turbine 52 may at least partially form a low speed spool. Similarly, the blade stages of a high pressure compressor 54 and high pressure turbine 55 may at least partially form a high speed spool. Alternative implementations may include a low pressure compressor driven by low pressure turbine as part of the low speed spool. As used herein, a "high pressure" compressor or turbine experiences a higher pressure than a corresponding "low pressure" compressor or turbine.

Augmentor section 30 may reside aft of the turbine section 28 and may be available to provide additional power/thrust. Augmentor section 30, which may be referred to as an "afterburner," may be positioned forward of exhaust duct section 32 to receive the hot exhaust gases as they exit turbine section 28. At the aft end of exhaust duct section 32 is nozzle system 34, which may be a convergent-divergent (C-D) nozzle. Hot gases passing through nozzle system 34 may provide thrust to move the aircraft forward.

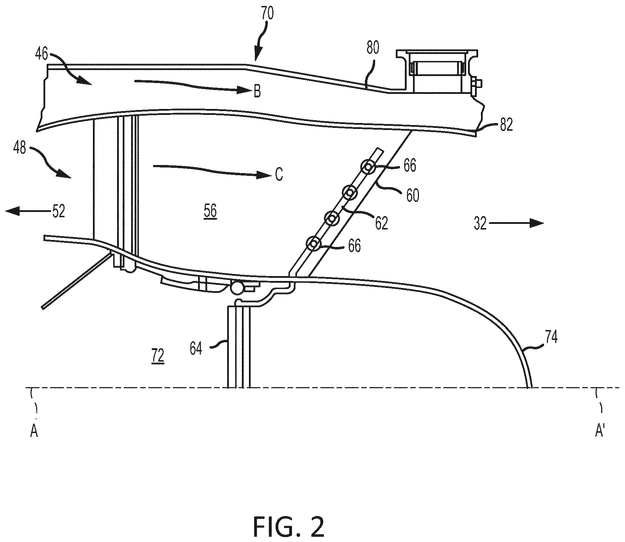

With reference to FIG. 2, in various embodiments, augmentor section 30 may comprise a turbine exhaust case (TEC) 70 and a center body 72 with a conically shaped tail cone 74. TEC 70 may comprise an outer case 80 and a concentrically spaced inner liner 82. Outer case 80 may form a portion of outer engine case structure 42, with momentary reference to FIG. 1. Inner liner 82 may be located radially inward of outer case 80, and may operate as a heat shield to protect outer case 80 from the exhaust gas flow (e.g., core airflow C) in core airflow path 48. A portion of bypass airflow path 46 may be defined in part by outer case 80 and inner liner 82. In various embodiments, air discharged from, for example, the fan section 22 may be communicated through the bypass airflow path 46.

Augmentor section 30 may further comprise a plurality of circumferentially arrayed augmentor vanes 56. Augmentor vanes 56 may extend generally radially between center body 72 and inner liner 82. In various embodiments, bypass airflow B may be received from the bypass airflow path 46 to cool and pressurize augmentor vanes 56. In various embodiments, augmentor vanes 56 may include one or more spraybar(s) 62. Spraybars 62 may be located proximate an aft end 60 of augmentor vanes 56.

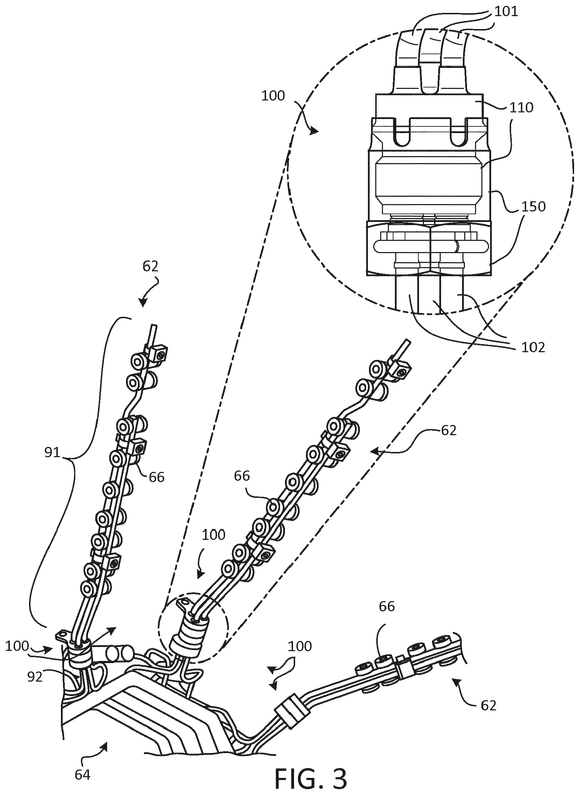

With combined reference to FIGS. 2 and 3, spraybars 62 may extend from a fuel manifold 64 of an augmentor fuel injection system. Fuel manifold 64 may be located radially inboard such that the spraybars 62 extend radially outward from fuel manifold 64. In various embodiments, the fuel manifold may be placed radially outboard such that the spraybars extend radially inward from the fuel manifold. Multiple fuel nozzles 66 may be spaced along each spraybar 62. Fuel nozzles 66 spray fuel into the exhaust gas stream downstream of the turbine section 28 (FIG. 1), which may be mixed with oxygen and ignited to generate a second combustion and increased thrust. An igniter or pilot system may be operated to ignite and maintain ignition of the fuel sprayed from spraybars 62.

In various embodiments, and with reference to FIG. 3, a connector assembly 100 connects a radially inward portion 92 of a spraybar 62 with a radially outward portion 91 of a spraybar. That is, the connector assembly 100 may be generally disposed between a first plurality of tubes 101 and a second plurality of tubes 102. Thus, the connector assembly 100 may enable multiple fluid conduits to be coupled to other fluid conduits in close proximity to each other. The connector assembly 100 may allow for the respective sets of fluid conduits to be in closer proximity than if the individual fluid conduits had to be individually connected together. Accordingly, due to the extra fuel lines, the augmentor may be supplied with more fuel and/or the delivery of fuel may be more precisely, accurately, uniformly, and/or selectively controlled. In various embodiments, the connector assembly 100 includes a first fitting 110 that is configured to be coupled to a first plurality of tubes 102 and a nut 150 through which a second plurality of tubes 102 is configured to extend. Engagement of the nut 150 with the first fitting 110 generally facilitates secure connection and retention of the second plurality of tubes 102 to the first plurality of tubes 101, according to various embodiments.

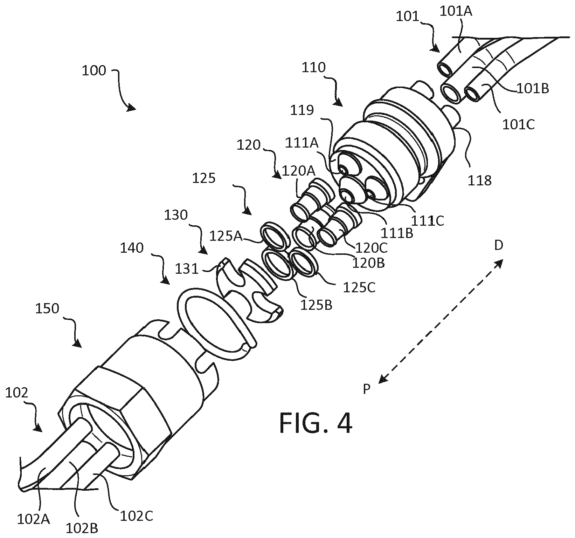

In various embodiments, and with reference to FIG. 4, an exploded view of the connector assembly 100 is provided. The connector assembly 100, according to various embodiments, includes the first fitting 110, a plurality of second fittings 120, a compression plate 130, and a nut 150. In various embodiments, the connector assembly 100 also includes a plurality of pivot washers 125 and a thrust wire 140, as described in greater detail below. A "P-D" axis is provided in FIG. 4, with "P" referring to "proximal" and "D" referring to "distal." Throughout the present disclosure, the terms "proximal" and "distal" are used to refer to relative positioning of the various components of the connector assembly 100, and to refer to surfaces, portions, ends, and/or features of the various components. For example, a proximal surface, a proximal portion, a proximal end, or proximal feature of a component of the connector assembly 100 is one that is generally positioned, situated, or orientated in the proximal direction relative to, for example, a longitudinal center point of said component, while a distal surface, a distal portion, a distal end, or a distal feature is one that is generally positioned, situated or oriented in the distal direction relative to, for example, a longitudinal center point of said component. Accordingly, the terms "proximate" and "distal," when used to describe the position and/or orientation of components in the connector assembly 100, refer to opposing directions along the depicted P-D axis. Thus, the term "axial" refer to directions along the P-D axis and the term "radial" may refer to directions extending away from or toward the P-D axis.

Generally, the first fitting 110 defines a plurality of ports 111A, 111B, 111C that extend through and within the first fitting 110. That is, the first fitting may be a unitary member (e.g., may have a monolithic structure) that has a plurality of ports 111 A, 111B, 111C through which fluid may pass. In various embodiments, a first plurality of tubes 101, such as tubes 101 A, 101B, and 101C, are configured to be respectively coupled to a distal end/side of the first fitting 110. Reference numeral "101" refers collectively to the set/plurality of individual tubes 101A, 101B, and 101C. A similar labeling/reference strategy is employed throughout the present disclosure, with certain reference numerals (e.g., 101, 102, 120, 125) referring to a set or a plurality of individual elements, with each of the individual elements of the set/plurality having the same reference numeral but with an alphabetic modifier (e.g., 101A, etc.).

In various embodiments, the first fitting 110 has a proximal end 119 that defines a plurality of proximal openings of the ports 111A, 111B, 111C and a distal end 118 that defines a plurality of distal openings of the ports 111A, 111B, 111C. The first plurality of tubes 101 may be permanently coupled to the first fitting 110, at the distal openings, via welding, brazing, or other attachment technique. A second plurality of tubes 102 may be respectively coupled to the plurality of second fittings 120. That is, tube 102A may be coupled to second fitting 120A, tube 102B may be coupled to second fitting 120B, and tube 102C may be coupled to second fitting 120C. The second plurality of tubes 102 may be respectively coupled to the plurality of second fittings 120 via welding, brazing, or other attachment techniques. As described in greater detail below, the first fitting 110 and the plurality of second fittings 120 are held together using the compression plate 130 and the nut 150. Thus, a first plurality of tubes 101 are configured to be respectively coupled to a plurality of ports on one side (e.g., a distal end 118) of the first fitting 110, a second plurality of tubes 102 are configured to be respectively coupled to a plurality of second fittings 120, and the plurality of second fittings 120 are configured to be respectively coupled to the plurality of ports of the first fitting 110 on the opposite side (e.g., a proximal end 119) of the first fitting 110.

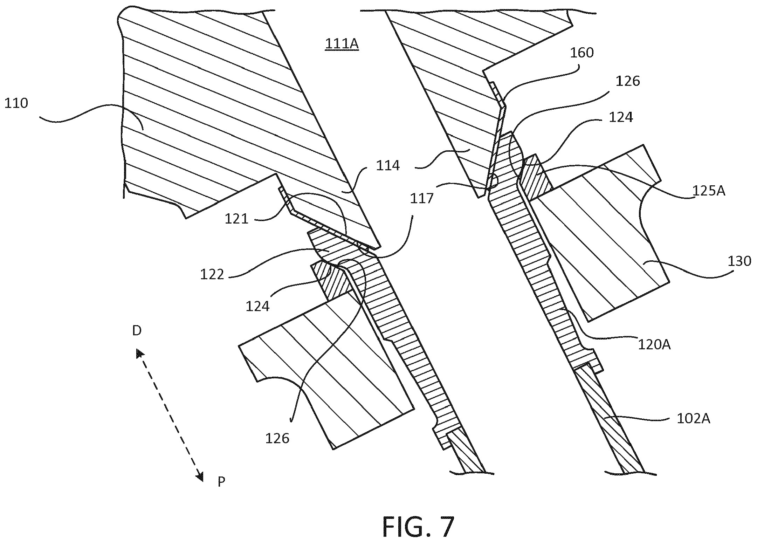

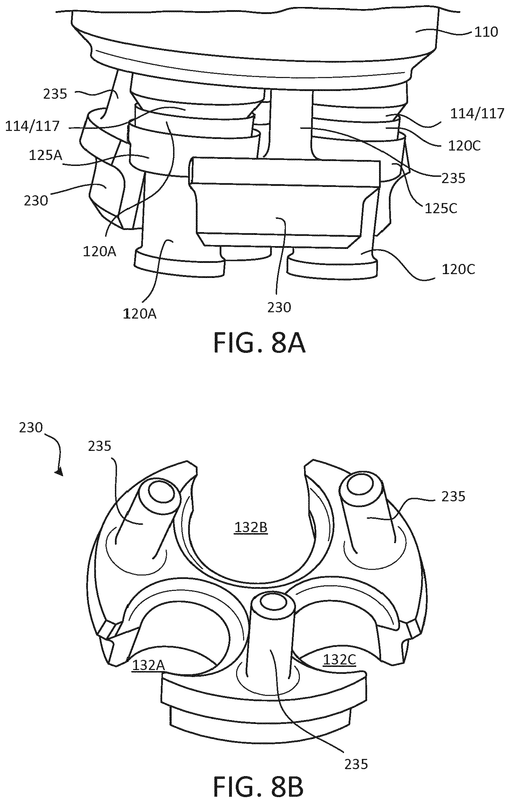

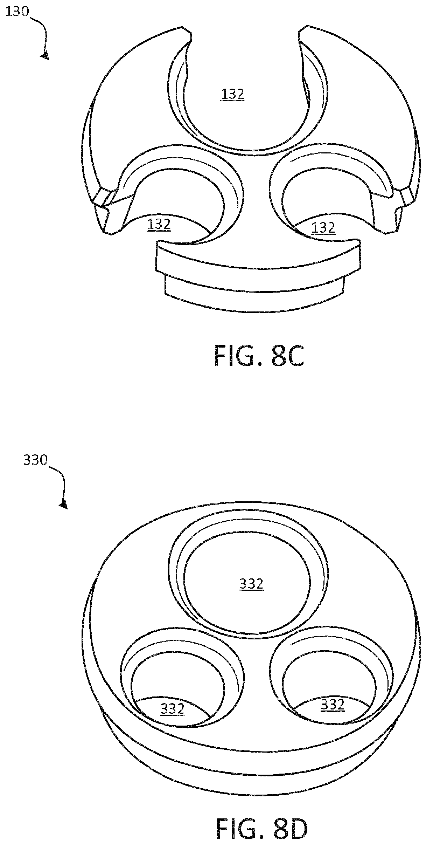

In various embodiments, and with reference to FIGS. 4, 5, and 6, the nut 150 is configured to be threadably engaged with the first fitting 110. Accordingly, advancing the nut 150 onto the first fitting 110 exerts an axial compression (e.g., a force along the P-D axis) on the plurality of second fittings 120 via the compression plate 130. That is, the compression plate 130 is configured to be positioned between the nut 150 and the plurality of second fittings 120 so as to transfer the force from the unitary nut 150 to the separate, individual second fittings 120A, 120B, 120C. As used in this context only, the term "between" refers to the transfer of an axial compression force, and does not necessarily refer to the compression plate 130 being physical positioned "in the middle of' the second fittings 120 and the nut 150. This axial compression on the plurality of second fittings 120 causes the distal portion 128 of each of the second fittings 120 to be seated against the proximal end 119 of the first fitting 110 (e.g., seated against and aligned with a respective port 111A, 111B, 111C of the plurality of ports 111). Additional details pertaining to the seated engagement between the plurality of second fittings 120 and the first fitting are included below with reference to FIG. 7, and additional details pertaining to the compression plate are included below with reference to FIGS. 8A, 8B, 8C, and 8D.

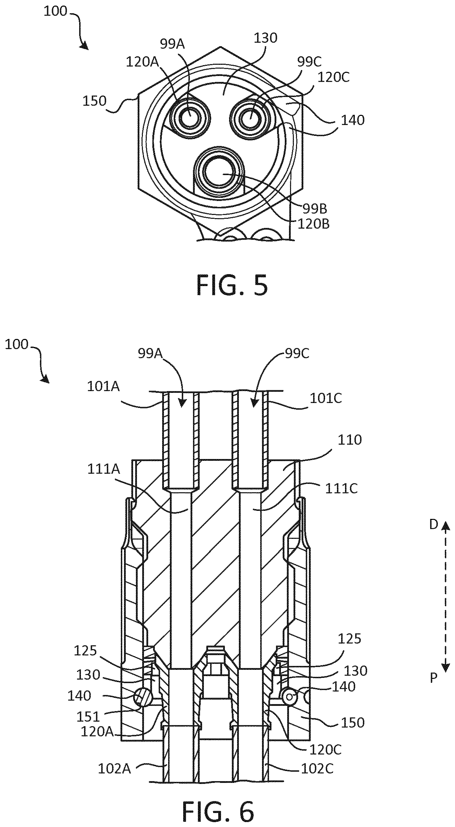

In various embodiments, and with continued reference to FIGS. 4, 5, and 6, the connector assembly 100 also includes a thrust wire 140. The thrust wire 140 may be configured to be disposed between the nut 150 and the compression plate 130. Once again, the term "between," in this context only, refers to the transfer of axial compression from the nut 150 to the compression plate 130 via the thrust wire 140. Accordingly, the thrust wire 140 may be configured to be in axial-compression-transferring communication between the nut 150 and the compression plate 130. In various embodiments, the compression plate 130 has a groove 131 defined on its proximal surface where the thrust wire 140 engages the compression plate 130. In various embodiments, and with specific reference to FIG. 6, the radially inward walls of the nut 150 may define an open channel 151 within which the thrust wire 140 is seated. The thrust wire 140 may be a longitudinal member, as opposed to a ring or annulus, and the thrust wire 140 may be inserted through a pass-through hole defined in the wall of the nut 150. Thus, with the nut 150 threadably engaged with the first fitting 110, advancement of the nut 150 applies axial compression on the thrust wire 140, which may be seated in the open channel 151, the thrust wire 140 applies axial compression to the compression plate 130, and the compression plate 130 applies axial compression to the plurality of second fittings 120 to connect/seat the second fittings 120 to the first fitting 110. In response to the connector assembly 100 being compressed and coupled together, continuous fluid channels (e.g., 99A, 99C) are collectively defined by the ports 111A, 111C of the first fitting 110 and the plurality of second fittings 120.

In various embodiments, and with reference to FIGS. 4, 6, and 7, the connector assembly 100 also includes a plurality of pivot washers 125. In various embodiments, each pivot washer 125A, 125B, and 125C of the plurality of pivot washers 125 is disposed between the compression plate 130 and a respective one of the second fittings 120A, 120B, 120C. The plurality of pivot washers 125 may be generally configured to dissipate mechanical stress/strain on the compression plate 130 and/or on the plurality of second fittings 120 caused by the axial compression. Further, the plurality of pivot washers 125 may provide a degree of tolerance such that a fluid seal between the first fitting 110 and the plurality of second fittings 120 is maintained despite imperfect alignment between the ports 111 of the first fitting 110 and the second fittings 120. In various embodiments, and with specific reference to FIG .7, a distal portion of each second fitting, such as second fitting 120A, may include a flange 122. A pivot washer 125A may be configured to engage a proximal surface 124 of the flange 122. Said differently, the axial compression from the compression plate 130 may be applied to the pivot washer 125A, which then applies the axial compression to the second fitting 120A via engagement of a distal surface 126 of the pivot washer 125A with the proximal surface 124 of the flange 122 of the second fitting 120A. In various embodiments, as shown in FIG. 7, the proximal surface 124 of the flange 122 of each of the second fittings (e.g., 120A) is curved so as to be convex. In various embodiments, as shown in FIG. 7, the distal surface 126 of each pivot washer (e.g., 125A) is tapered and or chamfered. In various embodiments, the convex proximal surface 124 of the flange 122 of each of the second fittings is directly engaged against the tapered distal surface 126 of the pivot washer. This engagement may enable the assembly to accommodate an amount of angular misalignment between the plurality of second fittings 120 and the first fitting 110.

In various embodiments, and with continued reference to FIG. 7, the connector assembly 100 includes a plurality of gaskets 160 that are configured to be respectively disposed between the distal surface 121 of the flange 122 of the distal portion of each second fitting (e.g., 120A) and the proximal end of the first fitting 110. In various embodiments, proximal end of the first fitting 110 comprises a plurality of frustoconical lugs 114 corresponding to the plurality of proximal openings of the plurality of ports 111 defined within the first fitting 110. The plurality of gaskets 160 may be disposed between the distal surface 121 of the flange 122 of each second fitting and the frustoconical surface 117 of the frustoconical lugs 114.

In various embodiments, and with reference to FIGS. 8A and 8B, the compression plate 230 may have a plurality of prongs 235 that extend between the compression plate 230 and the first fitting 110. These prongs 235 may be configured to prevent excessive advancement of the nut 150, which would potentially cause damage to the compression plate 230, the plurality of pivot 125 (e.g., 125A, 125C), and/or the plurality of second fittings 120 (e.g., 120A, 120C). That is, the prongs 235 may be configured to engage the first fitting 110 once the nut 150 has been advanced sufficiently along the first fitting 110 to properly compress the second fittings 120 against the first fitting 110 to maintain a proper/desired seal for fluid transfer between the first fitting 110 and the second fittings 120.

The compression plate, with reference to FIGS. 8B, 8C, and 8D, may have a plurality of notches 132 or a plurality pass-through apertures 332. That is, the compression plate 130 may have a non-continuous outer periphery such that open notches 132 are defined in the compression plate 130. In various embodiments, the compression plate 330 may have a continuous outer periphery and thus pass-through apertures 332 be defined within and may extend through the compression plate 330. The plurality of second fittings 120 are configured to be respectively positioned within and/or to respectively extend through the notches 132 or the pass-through apertures 332.

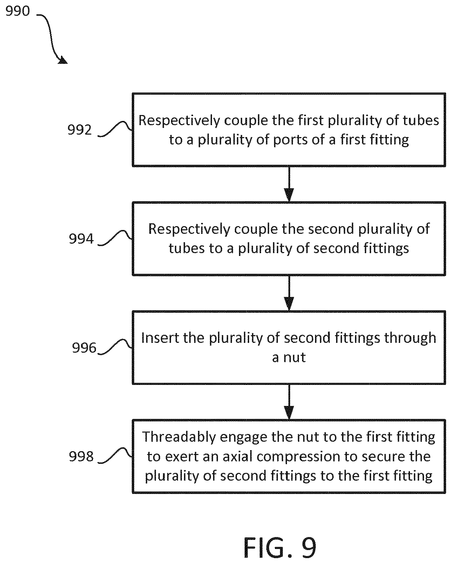

In various embodiments, and with reference to FIG. 9, a method 990 for coupling a first plurality of tubes to a second plurality of tubes is provided. The method 990 includes, according to various embodiments, respectively coupling the first plurality of tubes to a plurality of ports of a first fitting at step 992. The plurality of ports may be defined with and may extend through the first fitting. The method 990 may further include respectively coupling the second plurality of tubes to a plurality of second fittings at step 994. Still further, the method 990 may include inserting the plurality of second fittings through a nut at step 996 and threadably engaging the nut to the first fitting to exert an axial compression to secure the plurality of second fittings to the first fitting at step 998.

In various embodiments, the method 990 further includes positioning a compression plate in axial-compression-transferring communication between the nut and the plurality of second fittings. In various embodiments, the method further comprises positioning a thrust wire in axial-compression-transferring communication between the nut and the compression plate. In various embodiments, the method further includes respectively positioning a plurality of pivot washers between the compression plate and the plurality of second fittings.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A connector assembly comprising:
a first fitting, wherein a plurality of ports are defined within and extend through the first fitting;
a plurality of second fittings corresponding to the plurality of ports, wherein each second fitting of the plurality of second fittings is configured to connect to a respective port of the plurality of ports;
a compression plate, wherein the compression plate is configured to transfer an axial compression to the plurality of second fittings to respectively secure the plurality of second fittings to the plurality of ports of the first fitting; and
a nut, wherein the nut is configured to threadably engage the first fitting and is configured to apply the axial compression to the compression plate.

2. The connector assembly of claim 1, wherein:
the first fitting comprises a proximal end defining a plurality of proximal openings corresponding to the plurality of ports;
the first fitting comprises a distal end defining a plurality of distal openings corresponding to the plurality of ports;
each second fitting of the plurality of second fittings comprises a proximal portion and a distal portion;
the distal portion of each second fitting of the plurality of second fittings is configured to connect to a respective proximal opening of the plurality of proximal openings corresponding to the plurality of ports;
a first plurality of tubes are configured to extend from and be respectively coupled to the plurality of distal openings of the first fitting; and
a second plurality of tubes are configured to extend from and be respectively coupled to the proximal portion of the plurality of second fittings.

3. The connector assembly of claim 2, further comprising a plurality of pivot washers corresponding to the plurality of second fittings, wherein:
the distal portion of each second fitting of the plurality of second fittings comprises a flange; and
the plurality of pivot washers are configured to be disposed between the compression plate and a proximal surface of the flange of the distal portion of each second fitting of the plurality of second fittings.

4. The connector assembly of claim 3, wherein the proximal surface of the flange of the distal portion of each second fitting of the plurality of second fittings is convex.

5. The connector assembly of claim 4, wherein a distal surface of each pivot washer of the plurality of pivot washers is tapered and is configured to engage the proximal surface of the flange of the distal portion of a respective second fitting of the plurality of second fittings.

6. The connector assembly of claim 2, wherein the proximal end of the first fitting comprises a plurality of frustoconical lugs corresponding to the plurality of proximal openings.

7. The connector assembly of claim 6, wherein:
the distal portion of each second fitting of the plurality of second fittings comprises a flange;
a distal surface of the flange of the distal portion of each second fitting of the plurality of second fittings is tapered; and
the distal surface of the flange of the distal portion of each second fitting of the plurality of second fittings is configured to be seated against a respective frustoconical lug of the plurality of frustoconical lugs of the proximal end of the first fitting.

8. The connector assembly of claim 7, further comprising a plurality of gaskets corresponding to the plurality of second fittings, wherein the plurality of gaskets are configured to be respectively disposed between the distal surface of the flange of the distal portion of each second fitting of the plurality of second fittings and the plurality of frustoconical lugs of the proximal end of the first fitting.

9. The connector assembly of any preceding claim, further comprising a thrust wire configured to be disposed in axial-compression-transferring communication between the nut and the compression plate, and / or
wherein, optionally, the plurality of ports is three ports and the plurality of second fittings is three fittings, and /or
wherein, optionally, the compression plate comprises a plurality of notches corresponding to the plurality of second fittings such that each second fitting of the plurality of second fittings is configured to extend through a respective notch of the plurality of notches, or
wherein the compression plate comprises a plurality of pass-through apertures corresponding to the plurality of second fittings such that each second fitting of the plurality of second fittings is configured to extend through a respective pass-through aperture of the plurality of pass-through apertures.

10. A gas turbine engine comprising an augmentor section, the augmentor section comprising:
a plurality of proximal tubes extending radially outward from a fuel manifold, wherein the plurality of tubes form a radially inward portion of a spraybar;
a plurality of distal tubes that form a radially outward portion of the spraybar; and
a connector assembly disposed between the plurality of proximal tubes and the plurality of distal tubes such that the connector assembly connects the radially inward portion of the spraybar to the radially outward portion of the spraybar, wherein the connector assembly comprises a nut that secures and retains the plurality of proximal tubes to the plurality of distal tubes.

11. The gas turbine engine of claim 10, wherein the plurality of proximal tubes is three proximal tubes and the plurality of distal tubes is three distal tubes.

12. The gas turbine engine of claim 10 or 11, wherein the connector assembly comprises:
a first fitting, wherein a plurality of ports are defined within and extend through the first fitting;
a plurality of second fittings corresponding to the plurality of ports, the plurality of proximal tubes, and the plurality of distal tubes, wherein each second fitting of the plurality of second fittings is connected to a respective port of the plurality of ports; and
a compression plate;
wherein the nut threadably engages the first fitting, wherein in response to relative rotation between the nut and the first fitting, the nut applies an axial compression to the compression plate and the compression plate applies the axial compression to the plurality of second fittings to respectively secure the plurality of second fittings to the plurality of ports of the first fitting, wherein, optionally:
the first fitting comprises a proximal end defining a plurality of proximal openings corresponding to the plurality of ports;
the first fitting comprises a distal end defining a plurality of distal openings corresponding to the plurality of ports;
each second fitting of the plurality of second fittings comprises a proximal portion and a distal portion;
the distal portion of each second fitting of the plurality of second fittings is connected to a respective proximal opening of the plurality of proximal openings corresponding to the plurality of ports;
the plurality of distal tubes extend from and are respectively coupled to the plurality of distal openings of the first fitting; and
the plurality of proximal tubes extend from and are respectively coupled to the proximal portion of the plurality of second fittings.

13. A method for coupling a first plurality of tubes to a second plurality of tubes, the method comprising:
respectively coupling the first plurality of tubes to a plurality of ports that are defined within and extend through a first fitting;
respectively coupling the second plurality of tubes to a plurality of second fittings;
inserting the plurality of second fittings through a nut; and
threadably engaging the nut to the first fitting such that the nut applies an axial compression on the plurality of second fittings to respectively couple the second plurality of tubes to the plurality of ports of the first fitting.

14. The method of claim 13, further comprising positioning a compression plate in axial-compression-transferring communication between the nut and the plurality of second fittings.

15. The method of claim 14, further comprising positioning a thrust wire in axial-compression-transferring communication between the nut and the compression plate, and / or further comprising respectively positioning a plurality of pivot washers between the compression plate and the plurality of second fittings.
